# EUROPÄISCHE PATENTANMELDUNG

(11) **EP 0 973 278 A2**
(43) Veröffentlichungstag der Anmeldung: **19.01.2000**
(21) Anmeldenummer: 99440168.5
(22) Anmeldetag: 25.06.1999
(51) Int. Cl.: H04B 10/18

(54) **Temperaturstabilisation eines Predistorters mit Spannungsspeisung**

(30) Priorität: 15.07.1998 DE 19831716
(71) Anmelder: ALCATEL, 75008 Paris (FR)
(72) Erfinder: Braun, Klaus, 70435 Stuttgart (DE); Berger, Werner, 71254 Ditzingen (DE)
(74) Vertreter: Menzietti, Domenico, Dipl.-Ing

(57) **Zusammenfassung**

Ein Verfahren zum Stabilisieren des Arbeitspunkts einer Predistorterdiode eines Predistorters (Vorverzerrers) für einen optischen Modulator gegen Temperaturschwankungen, wobei die Predistorterdiode zwecks Einstellung des Arbeitspunkts mit einer temperaturabhängigen Spannung gespeist wird, ist dadurch gekennzeichnet, daß eine Referenzdiode mit der Predistorterdiode thermisch gekoppelt wird, daß die Referenzdiode mit einem konstanten Strom gespeist wird, wobei ihr ein durch den Predistorter zu verzerrendes Signal nicht zugeführt wird, und daß die Predistorterdiode mit einer Spannung gespeist wird, die der Spannung an der Referenzdiode proportional ist.

Ein Vorteil der Erfindung besteht darin, daß auf einfache Weise eine gute Temperaturstabilität erreicht wird.

## Beschreibung

Die Erfindung betrifft ein Verfahren zum Stabilisieren des Arbeitspunkts einer Predistorterdiode eines Predistorters (Vorverzerrers) für einen optischen Modulator gegen Temperaturschwankungen, wobei die Predistorterdiode zwecks Einstellung des Arbeitspunkts mit einer temperaturabhängigen Spannung gespeist wird.

Zum Einstellen des Arbeitspunkts einer Diode in einem signalbeeinflussenden Netzwerk ist einerseits Spannungseinprägung bekannt, andererseits Stromeinprägung. US-A-5_161_044, Figur 15 zeigt ein Diodennetzwerk zum Linearisieren des Ausgangssignals eines externen optischen Modulators, durch den das eine Lichtquelle verlassende Licht moduliert wird. Die Dioden sind dort mit Spannungsquellen verbunden. Da es sich um Halbleiterdioden handelt, ist deren Strom-Spannungs-Charakteristik temperaturabhängig. Daher ändert sich ohne besondere Maßnahmen bei Temperaturänderungen der Arbeitspunkt der Diode, weil die den Dioden zugeführte Spannung konstant ist. Es ist auch bereits bekannt, die Spannung von Predistorterdioden mittels Rechner nach einer Temperaturtabelle nachzuführen, wobei ein Temperatursensor und ein Analog/Digital-Wandler sowie ein Digital/Analog-Wandler benötigt werden. Hierdurch wird jedoch ein relativ großer Aufwand verursacht.

Außerdem ist aus US-A-5_210_633, Figur 2 eine Anordnung mit Stromeinprägung bekannt. Bei einer derartigen Anordnung ändert sich die an der Diode liegende Gleichspannung in Abhängigkeit von Pegelschwankungen des von der Diode durchgelassenen Signals, das ein Hochfrequenzsignal sein kann. Bei dieser bekannten Anordnung kann somit dann, wenn es sich bei dem Diodennetzwerk um eine Vorverzerrerschaltung (Predistorter) zum Linearisieren des Ausgangssignals eines optischen Modulators handelt, der Arbeitspunkt nur für einen einzigen Wert der Amplitude des Hochfrequenzsignals optimal eingestellt werden. Daher ist es bei der bekannten Anordnung erforderlich, die Stromquellen entsprechend den Amplituden des Eingangssignals für eine optimale Linearisierung der Kennlinie nachzuführen.

Der Erfindung liegt der Aufgabe zugrunde, die Temperaturabhängigkeit einer mit einer Spannung zwecks Einstellung des Arbeitspunkts gespeisten Predistorterdiode mit einfachen Mittels zu verringern. Diese Aufgabe wird gemäß der Erfindung dadurch gelöst, daß eine Referenzdiode mit der Predistorterdiode thermisch gekoppelt wird, daß die Referenzdiode mit einem konstanten Strom gespeist wird, wobei ihr ein durch den Predistorter zu verzerrendes Signal nicht zugeführt wird, und daß die Predistorterdiode mit einer Spannung gespeist wird, die der Spannung an der Referenzdiode proportional ist.

Zur Erfindung gehört auch eine Vorrichtung zum Stabilisieren des Arbeitspunkts einer Predistorterdiode eines Predistorters (Vorverzerrers) und ein Predistorter eines externen optischen Modulators.

Ein Vorteil der Erfindung besteht darin, daß auf einfache Weise eine gute Temperaturstabilität erreicht wird. Wegen der Stromspeisung der Referenzdiode ist deren Strom nicht temperaturabhängig. Eine Alterung der Predistorterdiode stört nicht, da die Referenzdiode ebenfalls altert. Es mag ausreichen, als Referenzdiode eine Diode zu verwenden, deren Eigenschaften bezüglich Änderung des Arbeitspunkts bei Temperaturänderung ähnlich sind wie bei der Predistorterdiode, jedoch nicht völlig gleich. Besonders bevorzugt ist jedoch und sehr einfach zu verwirklichen ist es, wenn als Referenzdiode der gleiche Typ wie für die Predistorterdiode verwendet wird. Da der Referenzdiode keine Hochfrequenz zugeführt wird, ändert sich der Arbeitspunkt der Referenzdiode und somit die Spannung an dieser nur in Abhängigkeit von der Temperatur.

Vorteilhaft wird die Predistorterdiode von dem der Referenzdiode zugeführten Strom entkoppelt. Hierzu kann ein Verstärker, vorzugsweise ein Operationsverstärker benutzt werden. Vorteilhaft wird der Spannungsabfall an der Referenzdiode mittels eines Operationsverstärkers der Predistorterdiode zugeführt. Besonders bevorzugt ist hierfür eine Regelvorrichtung.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen
- Fig. 1: eine Predistorterschaltung (Vorverzerrerschaltung) eines optischen Modulators mit insgesamt zwei Predistorterdioden, die antiparallel geschaltet sind, und mit zwei Referenzdioden;
- Fig. 2: eine der Fig. 1 ähnliche Anordnung, bei der jedoch lediglich eine einzige Referenzdiode vorhanden ist, deren Spannungsabfall für den unteren Zweig der Schaltung durch einen Inverter in der Polarität umgekehrt wird;
- Fig. 3: eine Abwandlung der Fig. 1, bei der anstatt einer einzigen Predistorterdiode in jedem der parallelen Zweige jeweils eine Serienschaltung von mehreren Predistorterdioden vorhanden ist;
- Fig. 4: ein Blockschaltbild der Anordnung mit einem optischen Modulator und einem erfindungsgemäßen Diodennetzwerk als Vorverzerrerschaltung.

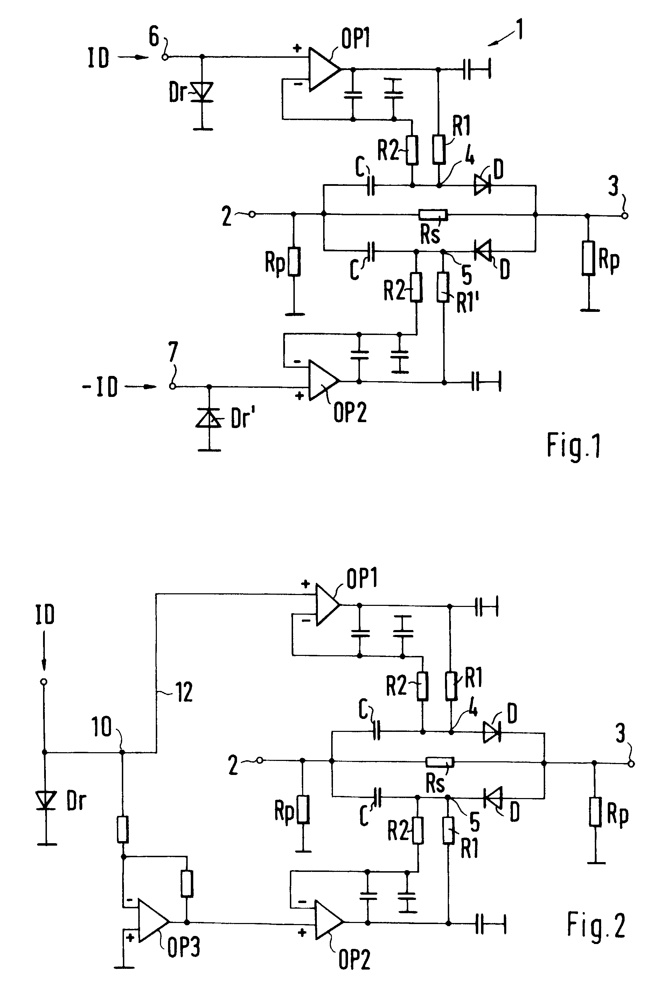

In Fig. 1 befindet sich der Signalweg einer Predistorterschaltung 1 zwischen einem Anschluß 2 (Eingang) und einem Anschluß 3 (Ausgang). Die Bedeutung dieser Anschlüsse 2 und 3 könnte auch vertauscht werden. Der Anschluß 2 einerseits und der Anschluß 3 andererseits sind jeweils über einen ohmschen Widerstand Rp mit Masse verbunden und die Anschlüsse 2 und 3 sind miteinander durch einen Widerstand Rs verbunden. Hochfrequenzkomponenten des Signals fließen vom Anschluß 2 zum Anschluß 3, außerdem über zwei parallele Zweige, die jeweils aus der Serienschaltung eines Kondensators C und einer Diode D (Halbleiterdiode) gebildet sind, wobei die Dioden in den beiden Zweigen entgegengesetzt gepolt sind und die Kondensatoren C unmittelbar miteinander verbunden sind. Ein Operationsverstärker OP1 weist einen Ausgang auf, der über einen Widerstand R1 mit dem Verbindungspunkt 4 zwischen dem Kondensator C und der Anode der mit diesem verbundenen Diode D des oberen Zweiges verbunden ist. Der Verbindungspunkt 4 ist außerdem über einen Widerstand R2 mit dem invertierenden Eingang des Operationsverstärkers OP1 verbunden. Der nicht-invertierende Eingang des Operationsverstärkers OP1 ist mit der Anode einer Referenzdiode Dr verbunden, deren Kathode an Masse liegt. Die Anode der Referenzdiode Dr wird über einen Anschluß 6 ein konstanter Diodenstrom ID bei Betrieb der Anordnung zugeführt. Einige zum Operationsverstärker OP1 führende Leitungen sind noch mit Kondensatoren in der gezeigten Weise mit Masse und untereinander verbunden, um Hochfrequenz aus dem Signalweg zwischen den Anschlüssen 2 und 3 vom Operationsverstärker OP1 fernzuhalten.

Derjenige Teil des Signalwegs, der der in Fig. 1 unteren Diode D zugeordnet ist, die entgegengesetzt gepolt wie die obere Diode D angeordnet ist, ist in ähnlicher Weise mit einem Operationsverstärker OP2 und einer Referenzdiode Dr' verbunden, wobei deswegen, weil der Ausgang des Operationsverstärkers OP2 über den diesem zugeordneten Widerstand R1' an einem Verbindungspunkt 5 mit der Kathode der Diode D des unteren Zweigs verbunden ist, dieser Operationsverstärker OP2 eine negative Ausgangsspannung liefern muß. Daher ist die Referenzdiode Dr' des unteren Zweigs entgegengesetzt gepolt wie die Referenzdiode Dr des oberen Zweigs, und ihr wird über den Anschluß 7 ein konstanter Diodenstrom mit negativer Polarität zugeführt.

Die gezeigte Beschaltung der Operationsverstärker OP1 und OP2 sorgt dafür, daß diese eine Spannungsverstärkung mit dem Wert 1 haben, und daß sie die Spannung am Verbindungspunkt 4 und 5 jeweils auf diejenige Spannung regeln, wie sie an der zugeordneten Referenzdiode Dr bzw. Dr' anliegt. Trotz des Vorhandenseins der Widerstände R1, R1' ergibt sich für den Gleichstromarbeitspunkt die Wirkung einer Spannungseinspeisung an den Verbindungspunkten 4 und 5.

Die Anordnung nach Fig. 2 ist in ihrer Funktion der Anordnung der Fig. 1 sehr ähnlich, daher werden hier lediglich die Abweichungen beschrieben. Unterschiede bestehen nur darin, daß lediglich eine einzige Referenzdiode Dr vorgesehen ist, die jedoch auch hier wiederum mit einem konstanten Strom gespeist wird. Die an der Referenzdiode Dr abfallende Spannung liegt an einem Schaltungspunkt 10 an und wird von diesem über eine Leitung 12 unmittelbar dem nicht-invertierenden Eingang des Operationsverstärkers OP1 zugeführt. Insofern besteht noch kein Unterschied zur Anordnung der Fig. 1. Die am Schaltungspunkt 10 anstehende Spannung wird jedoch außerdem über einen Inverter, der in bekannter Weise von einem Operationsverstärker OP3 gebildet wird, in der Polarität umgekehrt und dem nicht-invertierenden Eingang des Operationsverstärkers OP2 des unteren Zweigs der Fig. 2 zugeführt. Auf diese Weise führt der Inverter OP3 bei sonst gleichen Voraussetzungen dem Operationsverstärker OP2 eine Spannung in genau der gleichen Größe und Polarität zu, wie diese dem Operationsverstärker OP2 der Fig. 1 zugeführt wird.

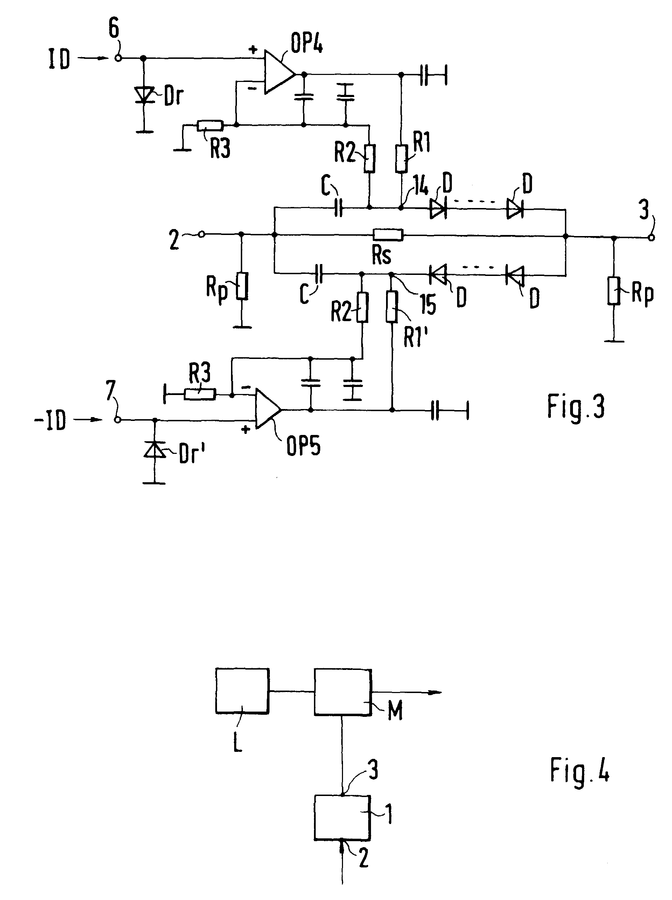

Auch bei der Anordnung nach Fig. 3 sind lediglich die Unterschiede gegenüber der Anordnung nach Fig. 1 erwähnt. Unterschiede liegen darin, daß statt einer einzigen Diode D in jedem Zweig zwischen den Anschlüssen 2 und 3 eine Mehrzahl (in beiden Fällen die gleiche Anzahl von Dioden) vorgesehen ist. Damit beispielsweise an jeder dieser Dioden die gleiche Spannung anliegt, wie an der Diode D der Fig. 1, muß der dem Operationsverstärker OP1 entsprechende Operationsverstärker OP4 eine um einem Faktor N, der der Anzahl der Dioden in einem Zweig entspricht, höhere Spannung liefern. Dies wird durch einen Spannungsteiler am invertierenden Eingang des Operationsverstärkers OP4 erreicht. Und zwar ist dieser invertierende Eingang einerseits über einen ohmschen Widerstand R3 der Größe R0 mit Masse verbunden, und andererseits hat der ohmsche Widerstand R2 die Größe (N - 1) x R0, der den invertierenden Eingang mit einem Verbindungspunkt 14 verbindet, der hinsichtlich seiner Lage im oberen Zweig der Dioden dem Verbindungspunkt 4 der Fig. 1 entspricht. Der untere Zweig der Anordnung nach Fig. 3 ist in entsprechender Weise geschaltet. Mehrere in Serie geschaltete Predistorterdioden werden z.B. verwendet, wenn sich mit nur einer Predistorterdiode die gewünschte Verzerrerkennlinie nicht erzeugen läßt. Auch hier bilden die die Verbindungspunkte 14 und 15 speisenden Operationsverstärker OP4 und OP5 Regelschaltungen, allerdings mit einem von 1 abweichenden Spannungsverstärkungsfaktor.

Die beiden Referenzdioden der Anordnungen nach Fig. 1 und 3 bzw. die einzige Referenzdiode der Anordnung nach Fig. 2 sind in enger thermischer Kopplung mit den Dioden D zwischen den Anschlüssen 2 und 3 angeordnet, so daß sie auf praktisch der gleichen Temperatur liegen und dadurch eine sehr gute Kompensation der Temperaturabhängigkeit der Predistorterdioden D erfolgt. Steigt beispielsweise die Temperatur der Predistorterdioden D und somit auch der Referenzdiode bzw. Referenzdioden Dr und Dr', so nimmt deren Innenwiderstand U/l ab, d.h., die Spannung an der Referenzdiode nimmt ab. Diese verringerte Spannung der Referenzdiode sorgt dafür, daß an die Predistorterdioden ebenfalls eine geringere Spannung angelegt wird, die jedoch wegen des entsprechend geringeren Gleichstromwiderstands der Predistorterdioden im wesentlichen zu dem gleichen Strom durch die Dioden führt wie vor der angenommenen Temperaturänderung. Auf diese Weise wird der Arbeitspunkt der Dioden weitgehend beibehalten.

Der Widerstand R1 dient bei allen Anordnungen zur Entkopplung des jeweiligen Operationsverstärkers von dem Hochfrequenzsignal auf dem Signalweg zwischen den Anschlüssen 2 und 3. Die Widerstände, die bei den gezeigten Schaltungsanordnungen verwendet werden, sind extrem induktivitätsarm und kapazitätsarm. Vorzugsweise sind sog. SMD-Widerstände (Surface Mounted Device-Widerstände) verwendet. Die Schaltung kann daher ohne weiteres beispielsweise bis zu einer Frequenz von etwa 860 MHz betrieben werden.

Bei der Anordnung nach Fig. 4 sendet eine Lichtquelle L unmoduliertes Licht aus, das über einen Lichtleiter einem Eingang eines externen optischen Modulators M zugeführt wird und den Modulator M als moduliertes Licht verläßt. Das Modulationssignal wird über den Signalweg zwischen den Anschlüssen 2 und 3 der Anordnung 1 nach Fig. 1 (wahlweise auch der anderen gezeigten Anordnungen) dem Modulationseingang des Modulators M zugeführt.ln den Signalweg zwischen Anordnung 1 und Modulator M kann auch noch ein Verstärker geschaltet werden.

Der externe Modulator weist im Beispiel eine bekannte Phasenmodulatoranordnung mit einem optischen Element auf der Basis von Lithiumniobat (LiNbO₃) auf. Das Ausgangssignal eines derartigen Modulators ist im wesentliche eine Kosinusquadratfunktion des Eingangssignals; steigt somit das Eingangssignal linear an, so hat das Ausgangssignal des Modulators einen sinusförmigen Verlauf. Die erfindungsgemäße Predistorterschaltung hat als Vorverzerrer die Aufgabe, die erste halbe Periode symmetrisch zum Wendepunkt der Sinuskurve zu linearisieren. Dies geschieht dadurch, daß das Modulationssignal zuerst durch den Vorverzerrer (Predistorter) so verändert wird, daß es bei seiner anschließenden Zuführung zum Modulator das gewünschte, bezüglich des nicht-vorverzerrten Modulationssignals (= Hochfrequenzsignal) linear modulierte Lichtsignal erzeugt.

## Patentansprüche

1. Verfahren zum Stabilisieren des Arbeitspunkts einer Predistorterdiode eines Predistorters (Vorverzerrers) für einen optischen Modulator gegen Temperaturschwankungen, wobei die Predistorterdiode zwecks Einstellung des Arbeitspunkts mit einer temperaturabhängigen Spannung gespeist wird,
dadurch gekennzeichnet, daß eine Referenzdiode mit der Predistorterdiode thermisch gekoppelt wird, daß die Referenzdiode mit einem konstanten Strom gespeist wird, wobei ihr ein durch den Predistorter zu verzerrendes Signal nicht zugeführt wird, und daß die Predistorterdiode mit einer Spannung gespeist wird, die der Spannung an der Referenzdiode proportional ist.

2. Vorrichtung zum Stabilisieren des Arbeitspunkts einer Predistorterdiode (D) eines Predistorters (Vorverzerrers) (1) für einen optischen Modulator (M) gegen Temperaturschwankungen, wobei die Predistorterdiode (D) im Betrieb zwecks Einstellung des Arbeitspunkts mit einer temperaturabhängigen Spannung gespeist ist,
dadurch gekennzeichnet, daß eine Referenzdiode (Dr, Dr') vorgesehen ist, die mit der Predistorterdiode (D) thermisch gekoppelt ist, daß die Referenzdiode (Dr, Dr') mit einem konstanten Strom gespeist ist, wobei ihr ein durch den Predistorter (1) zu verzerrendes Signal nicht zugeführt wird,
und daß eine Einrichtung zum Speisen der Predistorterdiode mit einer Spannung, die der Spannung an der Referenzdiode (Dr Dr') proportional ist, vorgesehen ist.

3. Vorrichtung nach Anspruch 2, dadurch gekennzeichnet, daß eine Einrichtung zum Entkoppeln der Predistorterdiode (D) von dem der Referenzdiode (Dr, Dr') zugeführten Strom vorgesehen ist.

4. Vorrichtung nach Anspruch 3, dadurch gekennzeichnet, daß die Einrichtung zum Entkoppeln einen Verstärker aufweist.

5. Vorrichtung nach Anspruch 4, dadurch gekennzeichnet, daß die Einrichtung zum Entkoppeln eine Regelvorrichtung aufweist.

6. Vorrichtung nach Anspruch 4 oder 5, dadurch gekennzeichnet, daß der Verstärker ein Spannungsverstärker ist, dessen Verstärkereingang die Spannung an der Referenzdiode zugeführt ist.

7. Vorrichtung nach Anspruch 6, dadurch gekennzeichnet, daß ein Signalweg für das zu verzerrende Signal zwei parallele Zweige mit jeweils einer Serienschaltung aus einem Kondensator (C) und mindestens einer Predistorterdiode (D) aufweist, wobei die Predistorterdiode bzw. Predistorterdioden des einen Zweigs entgegengesetzt gepolt zu der Predistorterdiode bzw. den Predistorterdioden des anderen Zweigs angeordnet sind, daß ein Verbindungspunkt (4, 5) zwischen dem Kondensator (C) und einer Predistorterdiode (D) in jedem Zweig jeweils mit dem Ausgang eines als Spannungsverstärker geschalteten Operationsverstärkers (OP1, OP2) gekoppelt ist, und daß dem nicht-invertierenden Eingang des einen Operationsverstärkers (OP1) der Spannungsabfall an der Referenzdiode (Dr) mit positiver Polarität und dem entsprechenden Eingang des anderen Operationsverstärkers (OP2) mit negativer Polarität zugeführt ist.

8. Vorrichtung nach Anspruch 7, dadurch gekennzeichnet, daß der nicht-invertierende Eingang jedes der Operationsverstärker (OP1, OP2) mit je einer Referenzdiode (Dr, Dr') verbunden ist.

9. Vorrichtung nach Anspruch 7, dadurch gekennzeichnet, daß der nicht-invertierende Eingang eines der Operationsverstärker (OP1) mit einer Referenzdiode (Dr) verbunden ist, und daß die Spannung an dieser Referenzdiode dem nicht-invertierenden Eingang des anderen Operationsverstärkers (OP2) über einen Inverter zugeführt ist.

10. Predistorter eines externen optischen Modulators, gekennzeichnet durch eine Vorrichtung nach einem der Ansprüche 2 bis 9.
